# EUROPEAN PATENT APPLICATION

(11) **EP 4 246 884 A1**
(43) Date of publication of application: **20.09.2023**
(21) Application number: 22162653.4
(22) Date of filing: 17.03.2022
(51) Int. Cl.: H04L 9/40, H04L 9/00, G06N 3/04

(54) **COMPUTER IMPLEMENTED METHOD FOR DETECTING A MALICIOUS EVENT OCCURRING IN A BLOCKCHAIN DATA STRUCTURE, A COMPUTING DEVICE, A COMPUTER PROGRAM AND A COMPUTER PROGRAM PRODUCT**

(71) Applicant: BIOTRONIK SE & Co. KG, 12359 Berlin (DE)
(72) Inventor: Ackermann, Thomas J., 10709 Berlin (DE); Heyer, Nicolas, 12355 Berlin (DE)
(74) Representative: Biotronik Corporate Services SE

(57) **Abstract**

The invention relates to a computer implemented method for detecting a malicious event occurring in a blockchain data structure, the method comprising: Feeding trained data into a discriminator-network of a reverse generative adversarial neural network, wherein the trained data define a plurality of attributes of valid blockchain transaction data according to which blockchain transaction data can be submitted to the blockchain data structure; feeding blockchain transaction data into a generator-network of the reverse generative adversarial neural network; analyzing the fed blockchain transaction data with the defined training data set for detecting the malicious event by comparing at least one attribute of the fed blockchain transaction data with a corresponding attribute of the defined training data set; detecting the malicious event, if the comparison of the comparing in the analyzing step results in a detection of a deviation between the attribute of the fed blockchain transaction data and the corresponding attribute of the defined training data set. The invention also relates to a computing device, a computer program and a computer program product.

## Description

The present disclosure is related to a computer implemented method for detecting a malicious event occurring in a blockchain data structure, a computing device, a computer program, and a computer program product.

The present disclosure particularly relates to a computer implemented method for detecting a malicious event and intercepting a submission of current blockchain transaction data into the blockchain based on conditions in pre-consensus queues and post-consensus queues using a reverse Generative Adversarial Neural network, rGAN.

Here, blockchain infrastructures are disclosed, in which automatic consensus methods determine the validity of blockchain transaction data. The nature of the blockchain transaction data may be of a financial nature or any other digital asset nature.

The present disclosure is also related to a deep learning method under appliance of a neural network, in which a computing device can filter blockchain transaction data iteratively (deep learning) and weighs the results (neural network), while learning and improving from the processed data.

The present invention thus relates to blockchain data structure security. In particular it relates to detecting and mitigating blockchain attacks.

In EP 3 125 489 A1, a computer implemented method for detecting malicious events occurring with respect to a blockchain data structure is described. In the method, a transaction creation profile is defined according to which transactions can be generated and submitted to the blockchain. A monitoring of the blockchain is applied to identify profile transactions and a comparing of identified profile transactions with the transaction creation profile so that a deviation from the transaction creation profile is detected. Such a detection corresponds to a malicious event occurring with respect to the blockchain.

In US 2017/0155677 A1, a method for a data-driven security framework modelling is disclosed in which attacker-based exploit-data are further developed for defense. However, with so many different versions of blockchains and distributed ledger systems, self-governed validity-testing, as for instance described in EP 3 125 489 A1 or US 2017/0155677 A1, is already actively overcome by attackers exploiting the differences in proofing and staking systems, as well as in the consensus methods.

For instance, zero-day attacks on vulnerable blockchains have been successful, causing significant financial damages as well as business credibility damages. Here, a zero-day vulnerability is a computer-software vulnerability that is unknown to, or unaddressed by, those who should be interested in mitigating the vulnerability (including the vendor of the target software). Until the vulnerability is mitigated, attackers can exploit it to adversely affect the blockchain data.

Zero-day attacks have not only been created and executed by one attacker, but are also actively advertised and sold to other potential attackers in order to maximize profits and to reward their creation. This, in turn, puts more and more blockchains (and their digital assets) at high risk through a larger group of attackers created by the gainful distribution of the zero-day attack tools.

Further, the creation of so many different blockchains and distributed ledger technology eco-systems has allowed attackers to move illicitly gained proceeds (e.g. stolen funds or assets) from one blockchain to another, intermingling ("mixing") funds to disguise them and to extract them later in a financial format usable outside the blockchain(s).

Blockchains and their variety of distributed ledger technologies and cryptocurrencies have allowed actors to bypass standard currency systems, such as fiat, for illicit uses from tax fraud, criminal enterprise gains, or sanction circumvention through the anonymity of the systems.

So, there is a need for further securing blockchain data structures to reduce these attacks.

The above identified objects are solved by the features of the independent claims. Further advantageous embodiments are derived from the respective dependent claims.

In an aspect of the present disclosure a computer implemented method is described for detecting a malicious event occurring in a blockchain data structure. The method comprises the following steps: Feeding trained data into a discriminator-network of a reverse generative adversarial neural network, wherein the trained data define a plurality of attributes of valid blockchain transaction data according to which blockchain transaction data can be submitted to the blockchain data structure; feeding blockchain transaction data into a generator-network of the reverse generative adversarial neural network; analyzing the fed blockchain transaction data with the defined training data set for detecting the malicious event by comparing at least one attribute of the fed blockchain transaction data with a corresponding attribute of the defined training data set; and detecting the malicious event, if the comparison of the comparing in the analyzing step results in a detection of a deviation between the at least one attribute of the fed blockchain transaction data and the corresponding attribute of the defined training data set.

Here, a blockchain database or blockchain data structure is a sequential transactional database that may be distributed and is communicatively connected to a network. Such a database is herein referred to as a blockchain though other suitable databases, data structures or mechanisms possessing the characteristics of a sequential transactional database can be treated similarly.

A blockchain provides a distributed chain of block data structures accessed by a network of nodes known as a network of validators and miners. Each block in the blockchain includes one or more transaction data also referred to as transaction data set or transaction data structures.

A node ("network node") is any computing device that can connect to a blockchain data structure, for instance a corresponding crypto currency data structure, of its choice via a respective blockchain software application, sometimes referred to as wallets, executively running on that computing device. In principle, a node serves as a connection point for blockchain transaction data transfer(s) in interaction with other nodes (participants) of the network worldwide, which together form the backbone of an blockchain infrastructure.

Downloading the blockchain software application, saving blockchains and opening required ports (channels for incoming and outgoing connections) at the computing devices interfaces is accompanied by the recognition of so-called consensus rules that are implemented in the software application, according to which an active node of the blockchain infrastructure may fulfil its assigned role.

Such an assigned role may for example the confirmation or rejection of new blockchain transaction data according to consensus rules. This occurs at all nodes of the blockchain and with each blockchain transaction data in equal manner in order to guarantee the decentralization of the blockchain infrastructure.

The more nodes are present, the more stable the blockchain infrastructure is and the faster it can act. Nodes may independently send and receive blockchain transaction data in the respective blockchain infrastructure.

The blockchain may include a Merkle tree of hash values or digest values for transaction data included in that block to arrive at a hash value for the block, which is itself combined with a hash value for a preceding block of that blockchain to generate the chain of blocks.

A new block of transaction data may be added (=submitted) to a blockchain by a miner software, hardware, firmware, or combination thereof, which hereinafter is referred to as a miner node. A miner node is communicatively connected to sources of the transaction data and may access or copy the blockchain. A miner node may undertake a validation of a substantive content of a transaction data (such as criteria and/or executable code included therein) and may add a block of new transactions to the blockchain when a challenge is satisfied. This challenge is a cryptographic riddle, typically involving a combination hash or digest for a prospective new block and a preceding block in the blockchain and some challenge criterion. Thus, miner nodes may each generate prospective new blocks for addition (submission) to the blockchain. Where a miner node satisfies or solves the challenge and validates the transactions in a prospective new block such new block is added to the blockchain. Accordingly, the blockchain provides a distributed mechanism for reliably verifying a blockchain transaction data entity such as an entity constituting or representing the potential to consume a resource.

The node may be a validation node, hereinafter also referred to as validator. One of the tasks of a validator is to check the correctness of hash functions and to check block information against a software-based consensus specification.

In some blockchains, validation nodes and miner nodes are combined and in such a case, a miner node may be type of validator or may be incorporated in the miner node.

The present disclosure detects a malicious event by applying artificial intelligence, AI, in a combination of a deep learning method and an interpretation of such learned data by using a reverse Generative Adversarial Neural Network, rGAN, technology.

A typical generative adversarial network, GAN, is a class of machine learning framework. Two neural networks contest with each other, like a competition. Given a training data, a GAN technique learns to generate new data with the same statistics as the training set. GANs have proven useful for semi-supervised learning, fully supervised learning, and reinforcement learning. A typical application of a GAN is to feed random noise into the generator network to create "false" data, and to train the discriminator network with known "good" data.

In the present disclosure, this process is reversed. Thus, blockchain transaction data are fed into the generator network on the assumption that they are all conforming events. So attributes such as properties and markers of the blockchain data are amplified for each blockchain transaction data. Further, the discriminator network is not trained with known good blockchain transaction data (formats and properties), but with trained (learned) data from multiple sources. The rGAN thus reverses the probability function p(xly) of a GAN to be used as probability function p(ylx). Thus, a validity y of a given blockchain transaction data x is weighted. So, a malicious event can be detected easier and more reliable.

In the present disclosure, at least one attribute of the blockchain transaction data is analyzed (compared) with respect to the trained data. An attribute is a specification that defines a property of the blockchain transaction data. It may also refer to or set a specific value for a given instance of such. Attributes as used herein may be considered as metadata of the blockchain transaction data. An attribute of the blockchain transaction data may relate the blockchain transaction data itself (payload) or may relate to a blockchain transaction data header of the blockchain transaction data. It may relate to a name and/or a value of a data element of the blockchain transaction data itself and/or a type and/or a class of the blockchain transaction data; and/or a data element related thereto, as outlined later in this document.

An attribute of a blockchain transaction data is compared with a corresponding attribute of the trained data. This may require an extraction of this attribute from either the blockchain transaction data and/or the trained data.

Advantageously, no (slow) signature based comparison is applied. This signature-free comparison enables a fast assessment in order to effectively perform zero-day defense in near real-time.

In a preferred embodiment, upon detecting the malicious event, executable code for tracking the fed blockchain transaction data in the blockchain data structure is included into the fed blockchain transaction data. So, the malicious event can be followed in order to identify the originator of that transaction data and/or to identify blockchain transaction data that may be related thereto, e.g. if a combined blockchain is used or if a mixing node has scrambled and/or mixed a plurality of malicious blockchain transaction data.

The expression "executable code" refers to any kind of digital data that can be interpreted or compiled to become an executable part of a command or program code or the transaction data. Hereinafter, the executable code may be the "setting/erasing of a flag" in the fed blockchain transaction data and/or may be the insertion of a specific program code that is identified in subsequent stages of the blockchain infrastructure. The code may be used such that (already) validation decisions and/or picking decisions and/or writing decisions of other nodes, such as validators or miner node in view of the fed blockchain transaction data may be rewritten or overwritten such that subsequent nodes of the blockchain infrastructure, such as other validator-nodes, consensus-nodes and/or minernodes, can identify this executable code or an execution thereof in order to activate or deactivate a certain behavior as will be addressed in the following. So, the blockchain transaction data may be marked to be identified as malicious event in a later process or may be marked to be identified as malicious event immediately.

In a preferred embodiment, upon detecting the malicious event, executable code for intercepting the fed blockchain transaction data from being submitted to the blockchain data structure is included into the fed blockchain transaction data. So, the direct consequence of this detection is to not allow this blockchain transaction data to be submitted (added, written) into the respective blockchain or is to not allow any transaction linked to this blockchain transaction data to be carried out.

In a preferred embodiment, upon detecting the malicious event, executable code is inserted into the fed blockchain transaction data for overwriting at least one validate decision regarding this fed blockchain transaction data decided by another node of the blockchain infrastructure. So, even if a validator-node or a plurality of validator-nodes of the blockchain infrastructure have (already) validated this fed blockchain data, the executable code overwrites this validation decision. The executable code is thus an overriding denial to ensure that it is not allowed that this blockchain transaction data is written into a blockchain-consensus queue and/or is written into a blockchain. This executable code - when executed - leads to the result that any transaction linked to this fed blockchain transaction data cannot be carried out (performed).

In a preferred embodiment, upon detecting the malicious event, executable code is inserted into the fed blockchain transaction data for prohibiting to write this fed blockchain transaction data into a consensus queue of the blockchain infrastructure. So, even if a validator-node or a plurality of validator-nodes of the blockchain infrastructure have (already) decided that this fed blockchain data should be written into a consensus queues, the executable code overwrites these decisions. The executable code is thus an overriding denial to ensure that it is not allowed that this blockchain transaction data is written into the blockchain-consensus queue and/or is written into a blockchain. This executable code - when executed - leads to the result that any transaction linked to this fed blockchain transaction data cannot be carried out (performed).

In a preferred embodiment, upon detecting the malicious event, executable code is inserted into the fed blockchain transaction data for removing the fed blockchain transaction data from a consensus queue. So, even if all validator-nodes confirm the validity and came to the consensus to include this blockchain transaction data into the blockchain infrastructure, the executable code - when executed - overwrites this consensus decision. A consensus method may be a proof of work or proof of stake method. So, in a subsequent picking process or writing process as carried out be any miner-node, no miner node can find this fed blockchain transaction data to be submitted into the blockchain. This executable code - when executed - leads to the result that any transaction linked to this fed blockchain transaction data cannot be carried out (performed).

In a preferred embodiment, upon detecting the malicious event, executable code is inserted into the fed blockchain transaction data for removing the fed blockchain transaction data from an open block of the blockchain, in which the fed blockchain transaction data was written from a miner-node of the blockchain infrastructure. The miner-node may be the winning miner node in a mining-process of the blockchain infrastructure. This executable code - when executed - leads to the result that any transaction linked to this fed blockchain transaction data cannot be carried out (performed).

In a preferred embodiment, if the comparison of the comparing in the analyzing step results in a detection of no deviation between the attribute of the fed blockchain transaction data and the corresponding attribute of the defined training data set (e.g. both attributes are the same/identical), submitting the fed blockchain transaction data to the blockchain data structure by execution of executable code to verify validity of the fed blockchain transaction data. So, the detection of the malicious event results in that this blockchain transaction data is not a malicious event and so, the blockchain transaction data is normally handled in the blockchain infrastructure meaning that the blockchain transaction data may pass all subsequent nodes, such as validator nodes, miner nodes, consensus queues with the necessary evaluations required therein.

In a preferred embodiment, at least one attribute of the validated blockchain data is extracted from the validated blockchain data, wherein the extracted at least one attribute is inserted into the training data set. In this scenario, a whitelist is used as trained data to feed the discriminator network of the rGAN. Thus, a whitelist is used for a learning process in the discriminator network of the rGAN. As soon, as a further valid blockchain transaction data is discovered, attributes thereof are extracted and fed into the training data. The rGAN is thus a deep learning method that learns "on-the-fly". A continuous improvement of the method is thus achieved.

In a preferred embodiment, upon detecting the malicious event, at least one attribute of the intersected blockchain data is extracted from the fed blockchain transaction data, wherein the extracted at least one attribute is inserted into the training data set of the generator network of the rGAN. In this scenario, a blacklist is used as trained data for a learning process in the generator network that concurs with the whitelist of the discriminator network of the rGAN. As soon, as a further invalid blockchain transaction data is discovered, attributes thereof are extracted and fed into the training data set of the generator network of the rGAN. The rGAN is thus a deep learning method that learns "on-the-fly". A continuous improvement of the method is thus achieved by concurrent learning of generator network and discriminator network.

In a preferred embodiment, the at least one attribute of the trained data is an identifier of a device accessing the blockchain data structure. The device may be a terminal device or a computing device. The device may be a node of the blockchain infrastructure. The device may be a software application running on the node, e.g. a wallet. The device may be an internet-of-things, IoT device, such as a home appliance device, a media equipment (TV, music player, digital image frame) or a smart meter. Preferably, the device is a medical device used to obtain physical condition data from a patient.

The identifier may be one or more of the following identifiers: a unique identification number, such as a serial number, an identification code or a pseudonym, that is unique in the blockchain infrastructure. Alternatively or additionally, the identifier may be a a communication protocol geolocation data, such as an Internet Protocol geolocation data or a cell information of a cell-based mobile communication network or an identification code of a wireless local area network, WLAN. Alternatively or additionally, the identifier may be a classification of the device, such as a high-complex class, e.g. for smart devices or a low-complex class, e.g. for home appliance or metering devices. Alternatively or additionally, the identifier may be a digital fingerprint of the device, such as a hash value.

In a preferred embodiment, the at least one attribute of the trained data is a transaction data element of the fed blockchain transaction data. The transaction data element may be a part of a header information of the transaction data, also referred to as metadata. In an embodiment, the transaction data element is one or more of the following values: an address of a source device accessing the blockchain data structure, an address of a destination device accessing the blockchain data structure and/or a transaction data pattern.

In a preferred embodiment, the at least one attribute of the trained data is a mixing node information in the blockchain data structure. A mixing node is a node of the blockchain infrastructure that is used to increase security and anonymity by mixing different blockchain transaction data of one blockchain and/or a plurality of blockchains. Such a mixing may be used by an attacker to cover a trace. The information of the mixing node may be one or more of the following, a multiplication effect; a mixing behavior; and/or a mixing pattern.

In a preferred embodiment, the blockchain transaction data are fed by means of a peer check node to the generator network of the reverse generative adversarial neural network, wherein the peer check node is an additional node in a blockchain infrastructure. So, the blockchain infrastructure obtains an additional node that is used to identify the malicious events.

In a preferred embodiment, the peer check node additionally functions as a blockchain validator.

In a preferred embodiment, the peer check node is randomly selected by the blockchain transaction data.

In a preferred embodiment, the malicious event is at least one of a double spending fraud; a smart contract falsification; a consensus-altering attempt; a block distribution modification; an illicit transaction; and/or a criminal transaction.

According to another aspect of the present disclosure, a computing device is configured to detect malicious events occurring with respect to a blockchain data structure. The computing device comprises a processor, a data communication interface and a data storage. The processor is configured to undertake the steps of the method as described herein.

According to another aspect of the present disclosure, a computer program comprising program code means for performing the steps of the method as described herein, when the program is executed on a computing device.

According to another aspect of the present disclosure, a computer program product comprises program code means stored on a computer readable medium for performing the steps of the method as described herein, when the program is executed in a computing device.

In the following, exemplary embodiments of the invention are described with reference to drawings. Those exemplary embodiments do not limit the scope of the invention. The same reference signs in different drawings indicate the same elements or at least indicate the same functions or functionalities unless otherwise stated.
- Fig. 1: shows a classification of various blockchain transaction types that can be detected, identified, tracked, and intercepted by the inventive method.
- Fig. 2: shows a schematic diagram of an exemplary embodiment for detection malicious events according to the invention.
- Fig. 3: shows a schematic diagram of an exemplary embodiment for feeding training data according to the invention.
- Fig. 4: shows a schematic diagram of an exemplary embodiment of a flow of blockchain transaction data according to the invention.
- Fig. 5: shows a schematic diagram of an exemplary embodiment of a flow of blockchain transaction data according to the invention.
- Fig. 6: shows a schematic diagram of an exemplary embodiment of a flow of blockchain transaction data according to the invention.
- Fig. 7: shows a schematic diagram of an exemplary embodiment of a flow of blockchain transaction data according to the invention.
- Fig. 8: shows a block diagram of an exemplary embodiment of a computing device node according to the invention.
- Fig. 9: shows method diagram of an exemplary embodiment of method according to the invention.

In the following description, numerous specific details are provided in order to give a thorough understanding of the exemplary embodiments. However, it will be apparent to the skilled reader that the example embodiments may be practiced without some of these specific details. In other instances, process operations and implementation details have not been described in great depiction if already well known.

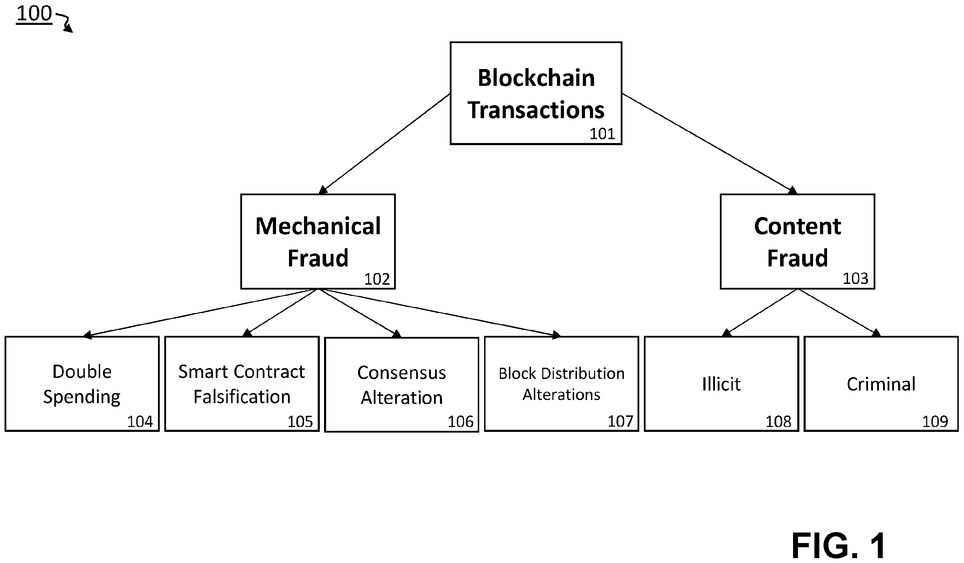

Fig. 1 shows a classification 100 of various blockchain transaction types that can be detected, identified, tracked, and intercepted by the present disclosure.

To recognize "unwanted", objectionable blockchain transactions in both public and private blockchains, they are classified as shown in Fig.1. Here, different classes and sub-classes are used in order to enable an individually addressing. While the majority of objectionable blockchain transactions 101 conforms with technical specifications, further deviations are possible. Objectionable blockchain transactions 101 can represent as mechanical fraud based blockchain transactions 102. These transactions 102 are represented according to their construction fraud. Objectionable blockchain transactions 101 can also be represented as content fraud based blockchain transactions 103. These transactions 103 are represented according to their content fraud.

In the classification scheme 100, mechanically fraudulent blockchain transactions 102 are further classified in a duplication based class 104, e.g. double spending, a smart contract falsification transaction 105 prior to any blockchain hashing values being added, a consensus alteration transaction 106, and a block distribution alteration transaction 107. The transaction 107 is meant to influence the block distribution and replication process.

In the classification scheme 100, content fraud transactions 103 are classified into illicit transactions 108 being transactions regarding to any wrongdoing with immorality or criminal transactions 109 being transactions that include punishable violation of applicable law.

All these classes of objectionable blockchain transaction data 101 are the target of the method according to the present disclosure in order to detect, identify, track, and to hold or intercept any objectionable blockchain transaction data 101 during a blockchain operation, especially before the objectionable blockchain transaction data 101 can be written with finality into a block of the related blockchain.

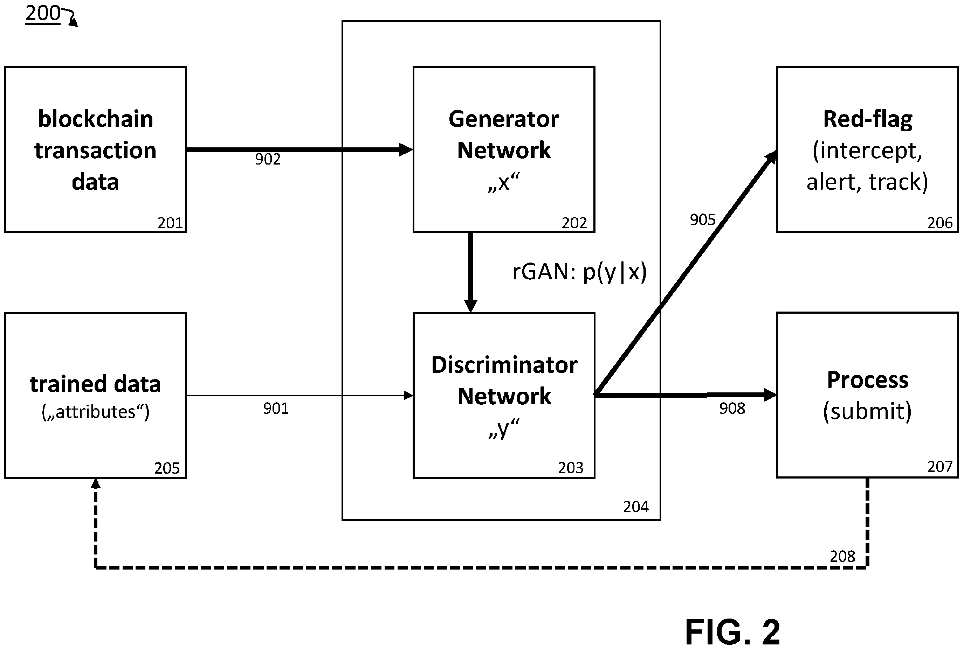

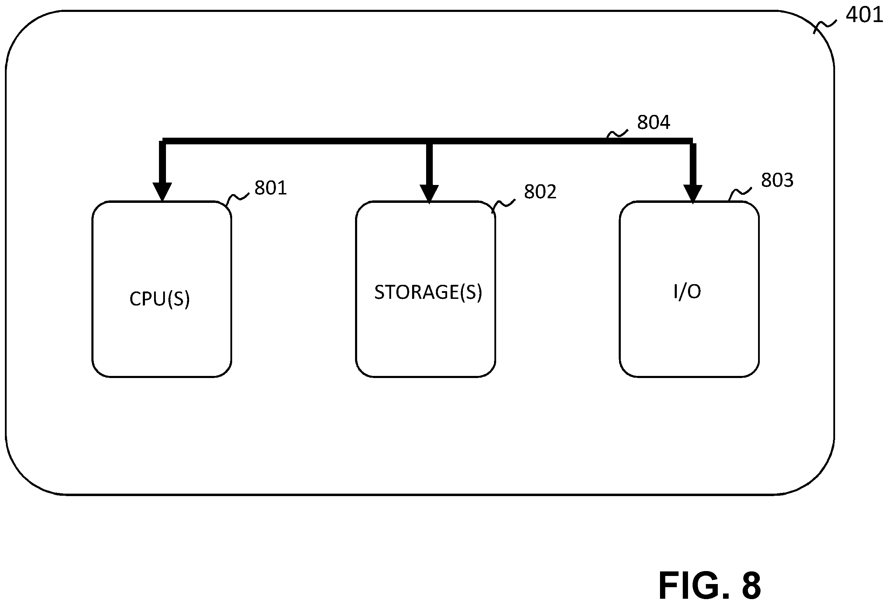

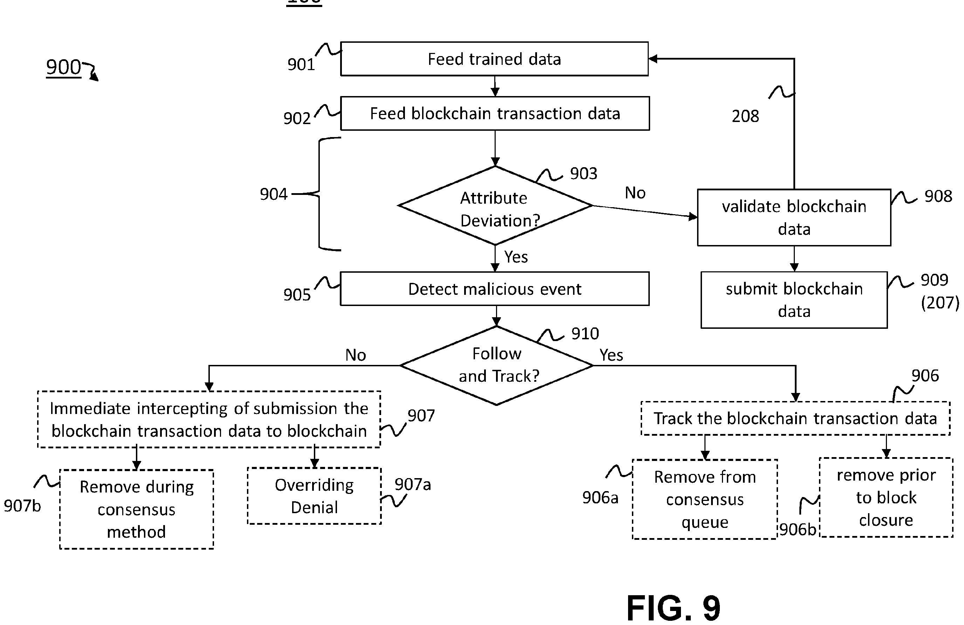

The description of the below Figures 2 to 7 is made in conjunction with Fig. 8 and especially with Fig. 9. The same reference signs are used to indicate same elements or same functions unless otherwise stated.

Fig. 2 shows a schematic diagram of an exemplary embodiment 200 for detection malicious events according to the present disclosure. In particular, Fig. 2 shows a reverse Generative Adversarial Neural Network 204, rGAN, used according to the present disclosure in order to invert the functionality of a GAN for malignant transaction analysis.

A detection system 200 includes the recognition and intercept process as shown in Fig. 9. It is achieved by artificial intelligence combined with a deep learning method and an interpretation of trained data 205 using rGAN 204 technology.

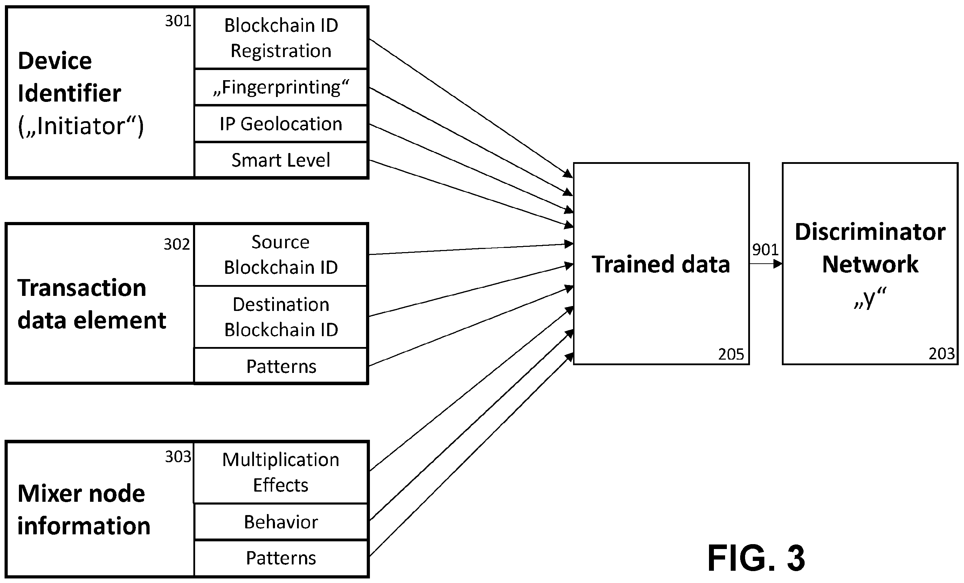

Here a blockchain transaction data 201, that may be one out of the classification scheme 100 as described in view of Fig. 1, is fed to a generator network 202 of the rGAN 204 in a step 902. Trained data 205 are fed to a discriminator network 203 of the rGAN 204 in a step 901. The trained data 205 may be attributes of the blockchain transaction data 201, as shown in Fig. 3. The discriminator network 203 of the rGAN 204 has an output at which an analyzing result of the rGAN 204 can be obtained. According to step 908, it may be analyzed that the fed blockchain transaction data 201 is valid and so, it may be submitted to the respective blockchain (see process 207).

According to step 905, it may alternatively be analyzed that the fed blockchain transaction data 201 is invalid and so, it may be red-flagged, immediately intercepted, or tracked for later interception of submitting the fed blockchain transaction data 201 to the respective blockchain. Each of these cases being represented by block 206 in Fig. 2 and will be described in the following.

While a typical application of a GAN is to feed random noise into the generator network 202 to create "false" data, and to train the discriminator network 203 with known "good" data (whitelist), in the system 200, this process is reversed. Thus, all blockchain transaction data 201 are fed from the blockchain into the generator network 202 on the assumption that they are all conforming the ruled events. Thus, an amplifying the properties and markers of each blockchain transaction data 201 is performed. Further, the discriminator network 203 is trained with known good transaction formats and properties (the attributes of the transaction data) but having a learned score set from multiple sources within a protected blockchain.

The rGAN 204 reverses the probability-function p(xly) of the GAN into the probability-function p(ylx). So, instead of weighing the probability of x given y, meaning the validity x given by the trained ruleset y in a GAN, the invention relies on weighing a probability of y given x, meaning weighing the validity y for a given blockchain transaction data x.

This reversal results in a validity confirmation (block 207) or in an invalidity confirmation (block 206) for all classes of transactions 101 as shown in the classification 100 according to Fig. 1. As can be seen, no (slow) signature comparison is applied. The signature-free comparison is fast in order to effectively perform zero-day defense in near real-time.

As shown with arrow 208, each valid blockchain transaction data (patterns and/or attributes, extracted from valid blockchain transaction data 201) are fed back into the trained data 205 for a continuous improvement of the system 200.

Fig. 3 shows a schematic diagram of an exemplary embodiment for feeding training data according to the invention. In particular, Fig. 3 shows the breakdown of data used as trained data 205 being the set sources to train the reverse Generative Adversarial Neural Network, rGAN 204 by being fed to the discriminator network 203 in step 901.

To create a training data set 205 for the discriminator network 203 of the rGAN 204 - to recognize both mechanical fraud transactions 102 as well as content fraud transactions 103 - a multitude of different data is constantly collected from a protected blockchain (not shown) and used to identify typical attributes for the transaction data 201.

Differences in the nature of these attributes allow the rGAN 204 to determine subtle differences in the content fraud class 103, thus also identifying illicit transactions 108 and criminal transactions 109.

One group of attributes are the identifiers 301 of a device, such as a node or a blockchain wallet, or an Internet of Things (IoT) device and/or similar devices. These identifiers 301 allow for individual fingerprinting, e.g. an image hash, of each device (directly or indirectly) assessing the blockchain infrastructure, the collection of unique IDs and a trusthistory-score. Additionally or alternatively, an IP geolocation can be monitored and a setting of a level of smartness for the device 401 may be evaluated, such as a robotic having a low-level due to being a simple reporting tool up to a high-level smart agent device or human-operated device. There may be several levels to set the smartness.

In another group, the attributes may be transaction data elements 302, such as transaction data pattern and/or source address and/or destination address.

In another group, the attributes may include information elements 303 such as pattern, behavior, and/or multiplication effects of a mixing node. A mixing node may turn a single transaction into a multitude of transaction in order to disguise the original transaction to spew those out over time and address ranges.

All identifiers 301, 302, 303 are constantly updated from the protected blockchain to allow for concurrent deep learning results for the Discriminator Network 203 of the rGAN.

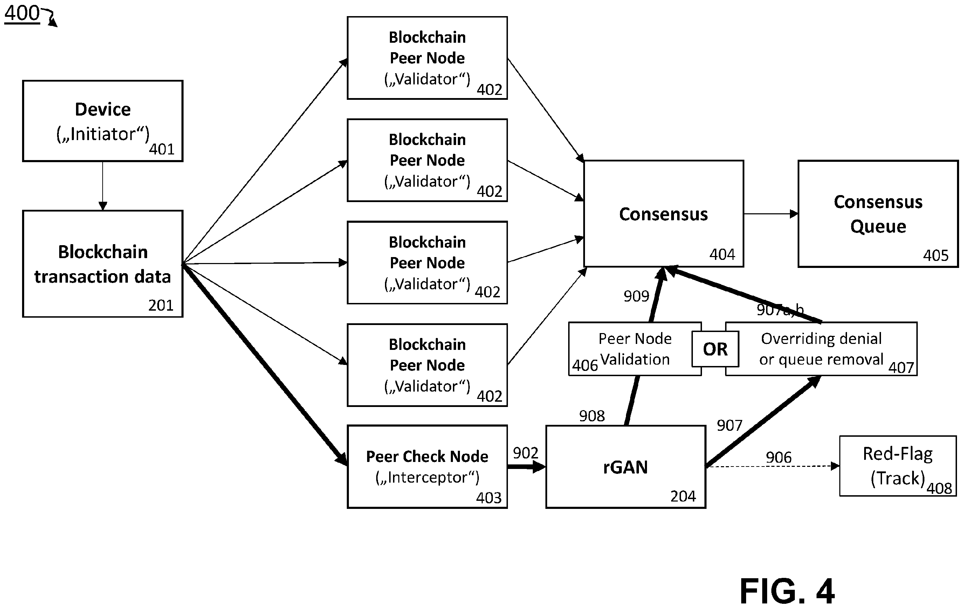

Fig. 4 shows a schematic diagram of an exemplary embodiment of a data flow 400 of blockchain transaction data 201 according to the invention. Fig. 4 shows a blockchain transaction data inspection and intercept scheme. In particular, Fig. 4 shows the flow of a blockchain transaction data 201 and the inspection through the rGAN 204, leading to the decision to function as a peer check node 403 and approve the transaction data 201 in step 908 or to intercept the transaction data 201 in steps 907 or 906, e.g. during a consensus process 404.

This validation and intercept process 400 adds an additional Peer Check Node 403 or a set of Peer Check Nodes 403 to the regular blockchain peer validator nodes 402. A transaction data 201 generated by a blockchain initiator device 401 selects several randomly collected peer nodes 402. One of these peer nodes 402 functions as a peer check node 403 and thus feeds in step 902 the transaction data 201 into the rGAN 204 as shown in Fig. 2, while still functioning as a validator node as well, see peer node validation 406.

The selection by a peer check node 403 may be mandatory (compulsory) for each blockchain transaction data 201 before submission to the related blockchain. Alternatively, in order to reduce computing efforts in the blockchain infrastructure, the selection of the peer check node 403 is made randomly.

The result of the output at the rGAN 204 - as shown in Fig. 2 - is either that the blockchain transaction data 201 is valid according to step 908 or that a malicious event is present according to steps 906 and 907 caused by invalid blockchain transaction data 201.

If the transaction data 201 is found being a valid transaction data 201 by means of the rGAN 204, it is considered that it does not match with any of the objectionable blockchain transactions 101 of the classification scheme 100 of Fig. 1. In such a case, the transaction data 201 is provided in step 908 to a Peer Node validation 406 so that the transaction data 201 is validated and will be submitted (passes) to the blockchain according to step 909. The validation of the peer node validation 406 goes along with the validation processes of all the other blockchain validating nodes 402.

If the transaction data 201 is not a valid transaction data 201 by means of the rGAN 204, it is considered to match at least one of the objectionable blockchain transactions 101 of the classification scheme 100 of Fig. 1 according to step 907. The transaction data 201 is flagged (marked) such that in a consensus method 404, being a proof of work or proof of stake method, an overriding denial according to step 907a is immediately performed and/or the transaction data 201 is prohibited from being written to a consensus queue in step 907b. Both actions of step 907a and 907b occur immediately. This flagging in step 907 may be the insertion of an executable code which upon execution enables an overriding of all validation decisions of validators 402 in step 907a and/or enables to withdraw a decision of all validators 402 to write the transaction data 201 into a consensus queue 405 in step 907b. As a result, the transaction data 201 is intersected from being submitted to any blockchain.

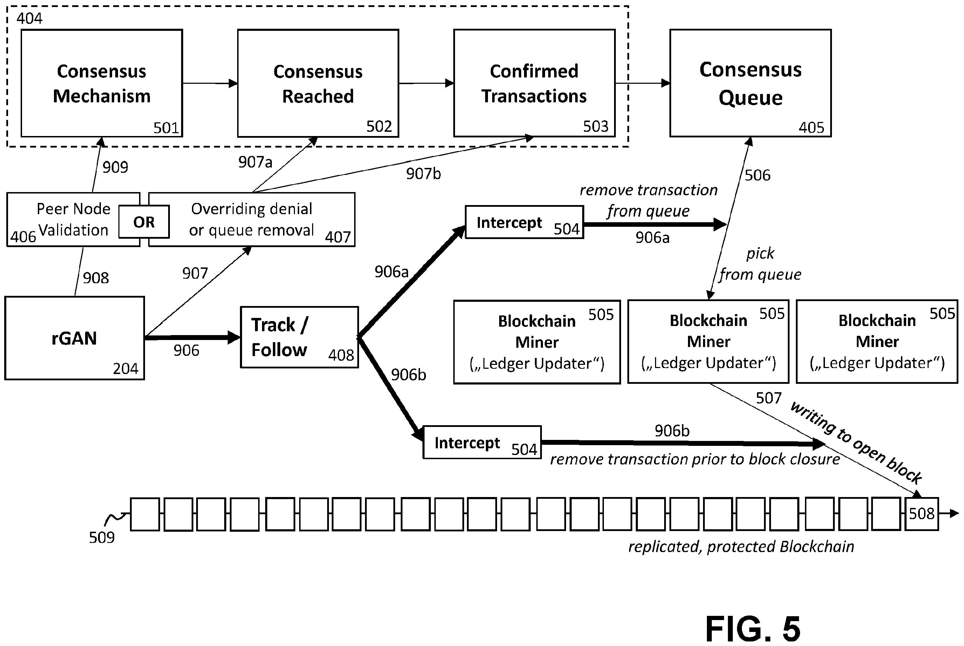

Optionally (as shown in dashed line 906), if the transaction data 201 is not a valid transaction data 201, it is tagged to be tracked and followed only, see block 408. In this optional scenario, the transaction data 201 is not, immediately intersected from being submitted to a block. This is advantageous for malicious events including overserving patterns of multiple transaction data 201, so that any invalidation is made at a later stage in the blockchain infrastructure as shown in Fig. 5.

Fig. 5 shows a schematic diagram of an exemplary embodiment of flow of blockchain transaction data 201 according to the invention. Fig. 5 shows another (follow-up) blockchain transaction data inspection and intercept scheme. Fig. 5 shows the intercepting of a transaction data 201 from being written to a consensus queue 405 as shown in Fig. 4. Fig. 5 also shows the removal of transaction data 201 from a consensus queue 405 when an objectionable transaction data 201 already succeeded through the entire consensus process 404 or is allowed to pass the entire consensus process 404 for observation according to the track and follow block 408 and step 906. Fig. 5 also shows the removal of transaction data 201 from an open block 508 when an objectionable transaction data 201 already succeeded through the entire consensus process 404 and was picked by a miner node 505.

So, Fig. 5 also shows a (late) intercepting 504 in a stage when the transaction data 201 was already picked in a picking process 506 by the winning block miner 505, which is the middle miner 505 of the three illustrated miners 505. It also shows a (late) intercepting 504 in a stage when the transaction data 201 was already written during a written process 507 by the winning block miner 505 into the open block 508.

Such an optional follow and track mechanism as indicated by block 408 is caused in step 906 and requires the ability to intercept 504 the transaction data 201 at a later stage of the data flow process 400, e.g. a stage following the already preceded consensus method 404.

The consensus method 404 is illustrated to have a plurality of stages, namely a collection mechanism 501 at which a validation 909 of a peer check node 403 upon detection of a valid transaction data 201 is inserted into the consensus method 404.

Another stage of the consensus method 404 is the validation conclusion stage 502 which directly follows the collection mechanism stage 501 in the consensus method 404 and that represents a consensus stage in the consensus method 404 in which all regular validators 402 (see Fig. 4) have reached a validation conclusion. This final validation conclusion can for instance be overruled by the overriding denial of step 907a (see Fig. 4).

Another stage of the consensus method 404 is the transaction confirmation stage 503 which directly follows the consensus reached stage 502 in the consensus method 404 and in which transaction data 201 can be removed right before entering the consensus queue 405 according to step 907b. So, according to step 907b, the fed blockchain transaction data 201 is prohibited from being written to the consensus queue 405.

However, if all stages 601 to 503 of the consensus method 404 have already been passed by the fed blockchain transaction data 201, the fed blockchain transaction data 201 is already inserted into the consensus queue 405 and thus, mechanism needs to be presented to remove the blockchain transaction data 201 in such a late stage if the malicious event has been detected.

According to Fig. 5, two alternative approaches can be applied:
In a first approach an interception 504 occurs prior to a picking process 506, in which a blockchain miner 505 - which is a blockchain updating node - is ready to pick a transaction data 201 from the consensus queue 405. Here, the fed blockchain transaction data 201 is waiting in the consensus queue 405 in order to be written into a next open block 508 of the blockchain 509 via a winning miner 505. In the first approach, the blockchain transaction data 201 is removed from the consensus queue 405 before the picking process is ended. The picking process may already have been started and the fed blockchain transaction data 201 cannot be removed from the consensus queue 405 according to step 907b.

In a second approach, an interception 504 occurs after the picking process 506, in which the winning miner 505 picked the transaction data to be written into an open block 508 of the blockchain 509 and after (or during) a writing process 507, in which the transaction data 201 is already written into the open block 508 of the blockchain 509. In this second scenario, the transaction data 201 can be removed from the open block 508 of the blockchain 509 prior to a closure process related to this block 508 of the blockchain 509.

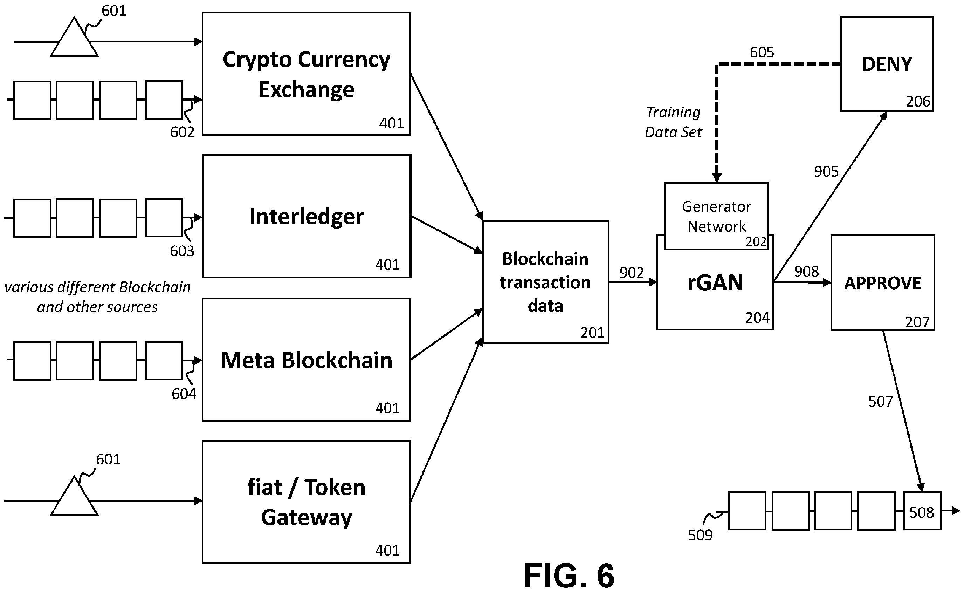

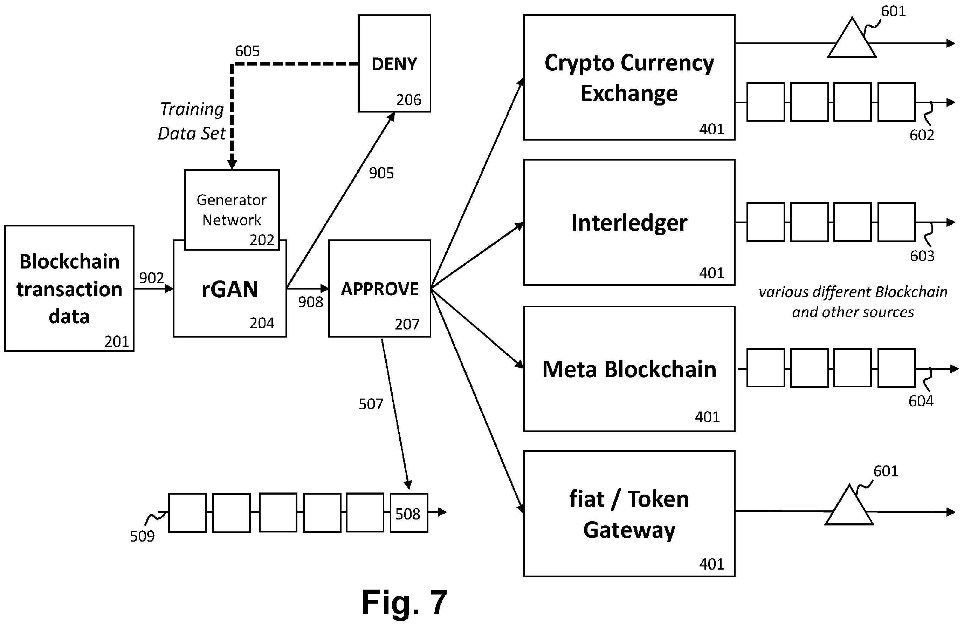

Objectionable transaction data 101 may be recognized and intercepted in dependence on an ingress transaction and/or an egress transaction of funds or other digital assets to and from protected blockchains as shown in Fig. 6 and Fig. 7.

Fig. 6 shows a schematic diagram of an exemplary embodiment of a flow of blockchain transaction data according to the invention. Figure 6 shows how inbound objectionable transactions 101 from various sources of protected blockchains 601 to 604 can be detected and be intercepted (ingress fund tracking & interception).

Fig. 6 shows incoming transaction data 201 that are fed from a variety of different types of blockchains 602, 603, 604 or from a variety of different sources, one being a fund 601, such as a fiat fund. These transaction data 201 can be in nature from a crypto currency exchange device 401 and/or an interledger device 401 being a blockchain-type-converter and/or a meta blockchain device 401 being a transaction exchange between identical technology blockchains and/or a fiat/token gateway device 401. Each and every computing device 401 is capable of providing these different kinds of blockchain nodes that deliver different kinds of blockchains 602, 603, 604. All these feeds provide transaction data 201, which is fed to the rGAN 204 in step 902 according to Fig. 2. The rGAN 204 may then decide to either approve the fed blockchain transaction data 201 in step 908 so that this fed blockchain transaction data 201 is allowed to be written (proceeded) into block 508 of the (protected) blockchain 509 in step 507. The rGAN 204 may alternatively decide to deny the fed blockchain transaction data 201 in step 905, which stalls it at that point so that this fed blockchain transaction data 201 is not submitted into block 508 of the (protected) blockchain 509.

Incoming identification and classes of invalid transaction data 201 may be fed back into a training data set of the generator network 202 of the rGAN 204 to allow a concurrent deep learning results for the discriminator network 203 of the rGAN 204. So, a blacklist of invalid transaction data 201 is learned in the generator network 202 of the rGAN 204 and a whitelist of valid transaction data 201 is learned in the discriminator network 203 of the rGAN 204. The learning process of the rGAN 204 is thus improved.

Fig. 7 shows a schematic diagram of an exemplary embodiment of a flow of blockchain transaction data according to the invention. Fig. 7 shows the detection and intercept of objectionable transaction data 101 generated within the protected blockchain 509 and addresses different blockchain types 602 to 604 or funds 601, so that blockchains cannot be transferred out to various egress blockchains and gateways. The fed blockchain transaction data 201 is already created on the blockchain 509 and is now addressed to a fund pool 601 or to different blockchains 602 to 604 via a multitude of portals, see also Fig. 6 for details. Here, the rGAN 204 decides to approve the exit transaction 908 for recording (writing) 507 in the open block 508 of the blockchain 509 or to deny such a submission according to step 905, thus keeping all funds or digital assets unchanged in the blockchain 509, e.g. with not updating the recent transaction data 201 into block 508.

Egress decision components in the denial process are fed back in step 605 into training data for the generator network 202 of the rGAN 204 to allow for concurrent deep learning results for the discriminator network of the rGAN 204 as already explained in view of Fig. 6.

Fig. 8 shows a block diagram of an exemplary embodiment of a computing device node 401 according to the invention. This node 401 has at least one CPU 801, may be as a processor, at least one data storage 802 and at least one input/output, I/O, interface 803. All components are interlinked via a bus 804.Other components may be included. Such a computing device 401 may be an initiator device 401, a validator node 402, a peer check node 403, a miner node 505, a consensus queue 405.

Fig. 9 shows a method diagram of an exemplary embodiment of the method 900 according to the invention. The individual steps 901 to 909 have already been described with the Figs. 2 to 7 and the description therein is valid for this method 900 diagram and following description is a mere repetition. The sequence of the steps is not fixed and can be interchanged.

In step 901, trained data 901 are fed to a discriminator network 203 of the rGAN 204. In step 902, the blockchain transaction data 902 are fed into the generator network 202 of the rGAN 204. The steps 901 and 902 can be interchanged, so that step 902 occurs prior step 901. In analyzing step 904, an attribute deviation is decided in 903 upon comparing corresponding attributes (see Fig. 3) of the trained data 205 and the fed blockchain transaction data 201. If in step 903, an attribute deviation is not detected (no-case of step 903), the fed blockchain transaction data 201 is considered to be valid. In step 908, the validating of the fed blockchain transaction data 201 is performed by execution of executable code. In step 909, the fed blockchain transaction data 201 is submitted into a block 508 of a blockchain 509 via consensus method 404, consensus queue 405, mining processes 506 and 507. In step 208, attributes of valid fed blockchain transaction data 201 are extracted and are fed back to the discriminator network 203 or the trained data 205.

If in step 903, an attribute deviation is detected (yes-case of step 903), a malicious event according to one of the objectionable blockchain transaction data 101 of Fig. 1 is detected in step 905.

In step 910 it is decided whether to track the invalid fed blockchain transaction data 201 or not to track it. The decision in step 910 is made based on an analysis whether further transaction data (future) may be fed and are involved in the malicious event as well but are covered by a mixing node or are otherwise hidden in the blockchain data structure. In the yes-case of the decision 910, the invalid fed blockchain transaction data 201 is tracked and followed by setting a red-flag in the blockchain transaction data 201. It may then be decided whether to remove the transaction data 201 from a consensus queue 405 (prior to a picking process 506) in step 906a or to remove the transaction data 201 from an open block 508 of the blockchain 509 prior to a block closing process for that open block 508 in step 906b.

In the no-case of the decision 910, the invalid fed blockchain transaction data 201 should be immediately be intersected from being inserted into the blockchain 509, see step 907. It is then decided whether to prohibit that the transaction data 201 are written into a consensus queue 405 in step 907b or to present an override denial in the consensus method 404 in step 907a.

All features of all embodiments described, shown, and/or claimed herein can be combined with each. Embodiments shown in a specific drawing may be used as intermediate steps for embodiments shown in another drawing.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

While various embodiments of the present invention have been described above, it should be understood that they have been presented by way of example only and are not limiting.

Numerous changes to the disclosed embodiments can be made in accordance with the disclosure herein without departing from the scope of the invention. Thus, the scope of the present invention should not be limited by any of the above described embodiments. Rather, the scope of the invention should be defined in accordance with the following claims.

### Reference signs

- 100: Classification of malicious events in blockchain transactions
- 101: Obj ectionable blockchain transactions
- 102: Mechanical fraud based blockchain transactions
- 103: Content fraud based blockchain transactions
- 104: Duplication based blockchain transactions
- 105: Smart contract falsification based blockchain transactions
- 106: Consensus alteration based blockchain transactions
- 107: Block distribution alteration based blockchain transactions
- 108: Illicit blockchain transactions
- 109: Criminal blockchain transactions
- 200: Detection system
- 201: Blockchain transaction data
- 202: Generator Network of rGAN
- 203: Discriminator Network of rGAN
- 204: Reverse generative adversarial neural network, rGAN
- 205: Trained data
- 206: Interception, flagging, deny
- 207: Submitting, processing, approve
- 208: Feedback of approved blockchain transactions
- 301: Device Identifier
- 302: Transaction data element
- 303: Mixer node information
- 400: Blockchain infrastructure/ process data flow
- 401: Computing device, initiator,
- 402: Peer node, validator
- 403: Peer check, interceptor
- 404: Consensus method
- 405: Consensus queue
- 406: Peer node validation
- 407: Overriding denial or queue removal
- 408: Red-Flag for tracking
- 501: Consensus mechanism
- 502: Consensus validation conclusion
- 503: Consensus transaction confirmation
- 504: Intercept process
- 505: Miner node
- 506: Picking process
- 507: Writing process
- 508: Open block of blockchain
- 509: Blockchain
- 601: Digital monetary data, digital fund/asset
- 602: Blockchain 2
- 603: Interledger blockchain
- 604: Meta blockchain
- 605: Feeding back of denied blockchain transactions
- 801: CPU(s), processor(s)
- 802: Data storage(s)
- 803: Input-Output Interface(s)
- 804: Bus
- 900: Detection method with steps 901 to 909

## Claims

1. A computer implemented method (900) for detecting a malicious event (101) occurring in a blockchain data structure, the method (900) comprising:
- feeding (901) trained data (205) into a discriminator-network (203) of a reverse generative adversarial neural network (204), wherein the trained data (205) define a plurality of attributes of valid blockchain transaction data (201) according to which blockchain transaction data (201) can be submitted (909) to the blockchain data structure;
- feeding (902) blockchain transaction data (201) into a generator-network (202) of the reverse generative adversarial neural network (204);
- analyzing (904) the fed blockchain transaction data (201) with the defined training data (205) for detecting the malicious event (101), wherein the analyzing (904) includes a comparing (903) of at least one attribute of the fed blockchain transaction data (201) with a corresponding attribute of the defined training data (205);
- detecting (905) the malicious event (101), if the comparison of the comparing (903) in the analyzing step (904) results in a detection of a deviation between the at least one attribute of the fed blockchain transaction data (201) and the corresponding attribute of the defined training data (205).

2. The method (900) according to claim 1, wherein upon detecting (905) the malicious event (101), executable code for tracking (906) the fed blockchain transaction data (201) in the blockchain data structure is included into the fed blockchain transaction data (201).

3. The method (900) according to claim 1 or 2, wherein upon detecting (905) the malicious event (101), executable code for intercepting (906, 907, 504) the fed blockchain transaction data (201) from being submitted to the blockchain data structure is included into the fed blockchain transaction data (201).

4. The method (900) according to one of the preceding claims, wherein upon detecting (905) the malicious event (101), executable code is inserted into the fed blockchain transaction data (201) for:
- providing an overriding denial (907a) for at least one validate-decision regarding this fed blockchain transaction data (201); and/or
- prohibiting (907b) to write this fed blockchain transaction data (201) into a consensus queue; and/or
- removing (906a) the fed blockchain transaction data (201) from a consensus queue (405) of the blockchain data structure; and/or
- removing (906b) the fed blockchain transaction data (201) from an open block (508) of the blockchain data structure, in which the fed blockchain transaction data (201) was written (507) from a miner node (505).

5. The method (900) according to one of the preceding claims, wherein if the comparison of the comparing (903) in the analyzing step (904) results in a detection of no deviation between the attribute of the fed blockchain transaction data (201) and the corresponding attribute of the defined training data set (205), submitting (909, 207) the fed blockchain transaction data (201) to the blockchain data structure by execution of executable code to verify validity (908) of the fed blockchain transaction data (201).

6. The method (900) according to claim 5, wherein at least one attribute of the validated blockchain data (201) is extracted from the validated blockchain data (201), wherein the extracted at least one attribute is inserted (208) into the training data (205).

7. The method (900) according to one of the preceding claims, wherein the at least one attribute of the trained data (205) is an identifier (301) of a computing device (401) accessing the blockchain data structure, wherein preferably, the identifier (301) is one or more of the following identifiers:
- a unique identification number;
- a communication protocol geolocation;
- a classification; and/or
- a digital fingerprint.

8. The method (900) according to one of the preceding claims, wherein the at least one attribute of the trained data (205) is a transaction data element (302) of the fed blockchain transaction data (201), wherein preferably the transaction data element (302) is one or more of the following values:
- an address of a source computing device accessing the blockchain data structure;
- an address of a destination computing device accessing the blockchain data structure;
- a transaction data pattern.

9. The method (900) according to one of the preceding claims, wherein the at least one attribute of the trained data (205) is a mixing node information (303) in the blockchain data structure, wherein preferably the mixing node information (303) is one or more of the following values:
- a multiplication effect;
- a mixing behavior; and/or
- a mixing pattern.

10. The method (900) according to one of the preceding claims, wherein the blockchain transaction data (201) is fed by means of a peer check node (403) to the generator network (202) of the reverse generative adversarial neural network (204), wherein the peer check node (403) is an additional node in a blockchain infrastructure (400) hosting the blockchain data structure.

11. The method (900) according to claim 10, wherein the peer check node (403) additionally functions as a blockchain validator (402, 406), wherein preferably the peer check node (403) is randomly selected by the blockchain transaction data (201).

12. The method (900) according to one of the preceding claims, wherein the malicious event (101) is at least one of:
- a double spending fraud;
- a smart contract falsification;
- a consensus-altering attempt;
- a block distribution modification;
- an illicit transaction; and/or
- a criminal transaction.

13. A computing device (401) configured to detect malicious events (101) occurring with respect to a blockchain data structure, the computing device (101) comprising a processor (801), a data communication interface (803) and a data storage (802), wherein the processor (801) is configured to undertake the steps of the method (900) according to one of the preceding claims.

14. A computer program comprising program code means for performing the steps of the method (900) according to one of the claims 1 to 12, when the program is executed on a computing device (401).

15. A computer program product comprising program code means stored on a computer readable medium for performing the steps of the method (900) according to one of the claims 1 to 12 when the program is executed in a computing device (401).
